Europäisches Patentamt

European Patent Office

Office européen des brevets

Publication number: **0 286 776**
**A1**

# EUROPEAN PATENT APPLICATION

Application number: 88100285.1

Date of filing: **12.01.88**

Int. Cl.⁴ **A01F 15/00 , A01D 89/00 , A01D 61/00 , B65G 45/00**

Priority: **15.04.87 GB 8709093**

Date of publication of application:
**19.10.88 Bulletin 88/42**

Designated Contracting States:
**DE ES FR GB IT NL**

Applicant: **DEERE & COMPANY**
**1 John Deere Road**
**Moline Illinois 61265(US)**

Inventor: **Geiser, Jens**
**Hohlstrasse 12**
**D-6660 Zweibrücken(DE)**
Inventor: **Viaud, Jean**
**16, Rue de L'école**
**F-57200 Sarreguemines(FR)**

Representative: **Collins, Geoffrey Stainton et al**
**c/o Reddie & Grose 16 Theobalds Road**
**London WC1X 8PL(GB)**

## Pick-up assembly, and baling machine.

A machine for forming large cylindrical bales of hay is provided, at the inlet (60) to its baling chamber (58), with a pick-up (74) which extends substantially beyond the sides (16, 18) of the machine. There is an auger (76, 78) at either end of the pick-up to feed crop inwardly to the inlet (60). Thus the arrangement can pick crop up from a windrow wider than the inlet (60).

In order to prevent wrapping of crop round the augers (76, 78) and the breakage of brittle crop which tends to cause plugging , the augers (76, 78) have scrapers (84, 86) which (in plan view) are disposed so as to diverge from the axis of their associated auger in the direction of feeding of the crop by the auger. In this way the crop pursues a smooth path (106) to the inlet (60).

FIG. 1

## Pick-up Assembly, and Baling Machine

This invention relates to a pick-up assembly for gathering cut crop and transferring it for processing comprising a pick-up and an auger above the pick-up (when viewed in plan) to transfer crop along the pick-up and also relates to a baling machine for forming cylindrical bales of crop having such an assembly.

Machines, towed by a tractor, for forming large cylindrical bales of hay or other crop (so called "round balers") are well known. As the machine advances, the crop lying in a windrow is removed by a transverse pickup and delivered rearwardly through an inlet into a baling chamber where it is rolled into a bale between sets of oppositely moving belts or by rolls in a cylindrical configuration.

In our European patent 0 064 112 we have described and claimed a round baler of which the pick-up extends substantially beyond the sides of the machine and is provided with an auger at either end of the pick-up which transfers crop to the central portion of the pick-up. This central portion is aligned with the inlet to the baling chamber. Such an arrangement increases the capacity of the machine, enables it to deal with a wide windrow, and tends to produce more regular shaped cylindrical bales.

In certain conditions and crops, e.g. silage, there is a tendency for crop to wrap round the augers and thus foul them, and the present invention reduces or eliminates this difficulty.

According to a first aspect within the concept of the present invention a scraper is in contact with the auger, or closely spaced therefrom, so as to reduce wrapping of crop around the auger.

However, again in some harvesting conditions a further problem can arise. When crops are brittle they may break at the augers and scrapers with resultant plugging.

In order to reduce or avoid this, preferably the scraper comprises an elongated member which is disposed (in plan view) so as to diverge from the axis of the auger in the direction of transfer of the crop by the auger. The flow pattern of the crop over the pick-up is thereby smoother, i.e. less sharply angled.

According to a second aspect within the concept of the invention a said baling machine for forming cylindrical bales of crop has a pick-up assembly of the first aspect of the invention.

An embodiment of the invention will now be described in relation to the accompanying diagrammatic drawings in which:

Fig. 1 is a perspective view of a machine for forming large cylindrical bales of hay showing in particular a pick-up assembly thereof;

Fig. 2 is an elevational view of the left side of the baler of Fig. 1 with the left hand side of the machine removed;

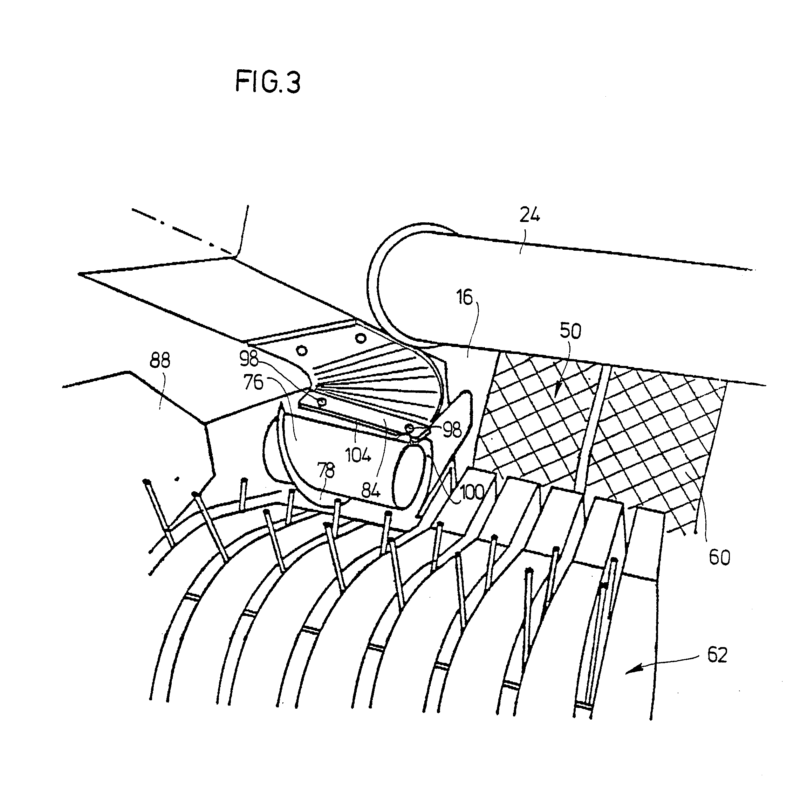

Fig. 3 is a perspective view of a portion of the pick-up assembly of Fig. 1 at the right hand side of the machine looking toward the right; and

Fig. 4 is a plan view of the pick-up assembly of Fig. 1 showing especially the crop flow pattern into the machine.

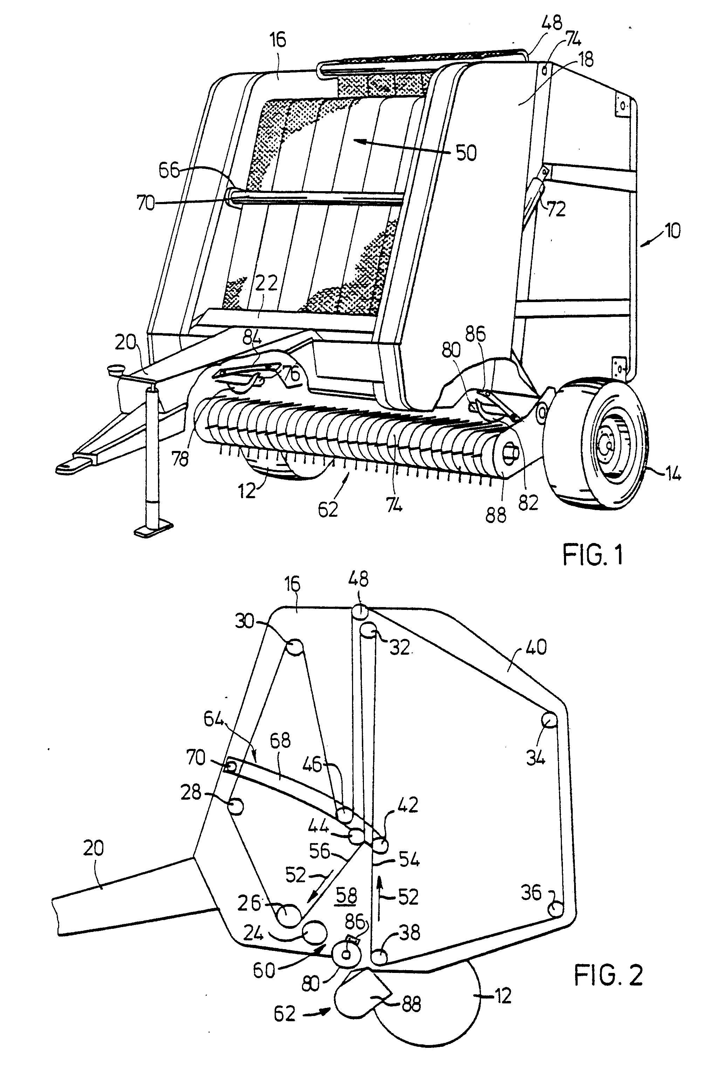

In the drawings (and particularly in Figures 1 and 2), the machine includes a main frame 10 mounted on a pair of wheels 12, 14. The main frame 10 has a pair of upright, opposite, fore-and-aft extending right and left side walls 16, 18 connected by transverse beams. A draft tongue 20 is rigid with a cross beam 22 at the front of the frame 10 and extends forwardly for attaching the baler to a tractor (not shown) which draws the machine.

A plurality of lateral rolls extends over the width of the machine. One set of rolls 24, 26, 28, 30, 32 is journalled in a forward fixed portion of either side wall, whilst a further set constituted by rolls 34, 36, 38 is journalled in a rearward swingable gate portion 40 of the side walls. There is also a pair of chamber restricting rolls 42, 44, and take-up and tensioning rolls 46, 48.

Six rubber belts 50 are trained side-by-side over the rolls, with the exception of the roll 24 which acts as a stripper roll, to provide the configuration shown in Fig. 2 and they move in the direction indicated by arrows 52, the stripper roll 24 being driven clockwise as viewed in Figure 2. Upwardly extending runs 54, 56 of the belts provide with the side walls 16, 18 a bale-forming chamber 58 which has an inlet 60 for crop received from a pick-up assembly 62 beneath it which will be described in detail later.

In order to accommodate the increasing diameter of a growing bale core (not shown) in the bale-forming chamber 58, the size of the chamber must also increase and a belt take-up and tensioning mechanism 64 is provided for this purpose at either side of the machine. These mechanisms include: a pair of arms 66, 68 which are mounted on a horizontal transverse pivot shaft 70 at the forward end of the main frame 10; the take-up and tensioning roll 46 which is supported at either end at an intermediate location on the arms 66, 68; and the pair of chamber restricting rolls 42, 44 supported at the free end of the arms. The arms are biased in a clockwise direction.

The rear gate portion 40 is movable by a pair of upwardly extending hydraulic piston and cylinder units on either side of the main frame 10 of which only a left hand unit 72 is shown which is pivotally connected at its lower end to the forward fixed portion of the side wall 18 and at its upper end to the gate portion 40 which is swingable upwardly and downwardly about a pivot arrangement 74 at its upper forward region.

In operation, crop lying in a windrow is lifted by the pick-up assembly 62 and conveyed to the baling chamber 58 where the oppositely moving runs 54, 56 of the belts 50, aided by the stripper roll 24, cause the crop to turn anticlockwise (as viewed in Figure 2) to form a bale core of increasing size which eventually overcomes the tension in the belts 50 brought about by the tensioning mechanisms 64, and the arms 66, 68 consequently swing upwardly and thus the chamber 58 increases in size to accommodate as necessary the bale core as its diameter grows. When a full sized bale is formed, it is wrapped with twine to maintain its shape, the gate portion 40 opened, and the bale deposited on the ground. The gate portion 40 is then closed and the operation started again.

Returning now to the pick-up assembly 62 mentioned above, this consists of a transverse pick-up 74, an auger 76 with a flight 78 above the right hand end of the pick-up and an auger 80 with a flight 82 at the other end, and scrapers 84, 86 associated respectively with the flights 78, 82.

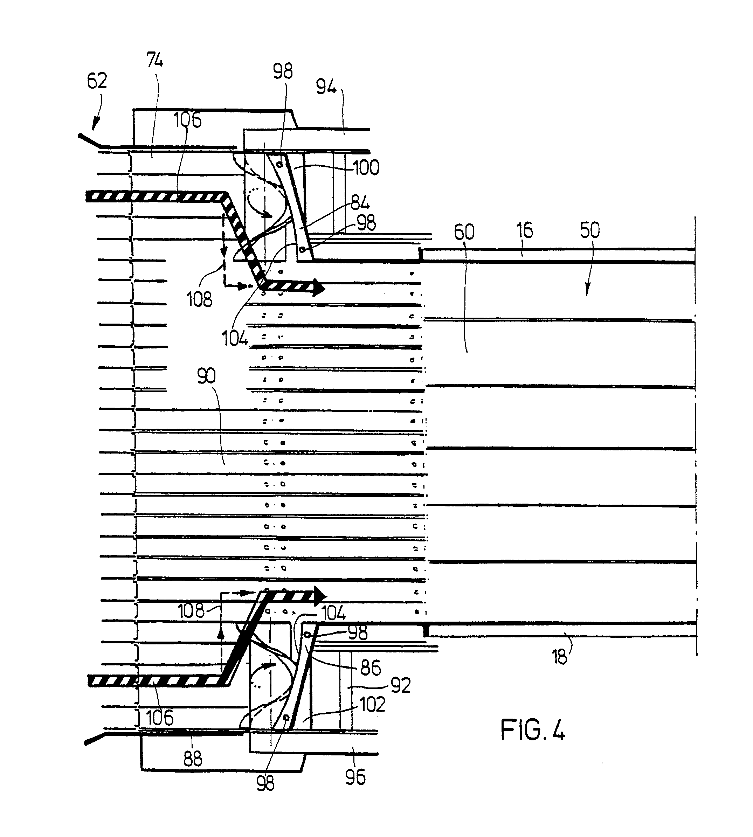

The pick-up 74 has a frame 88, is substantially wider than the inlet 60 and has a central portion 90 aligned therewith (Fig. 4). "Width" here is taken in relation to the machine as a whole, but the pick-up 74 when considered on its own can be regarded as being of extended "length". The augers 76, 80 which are mounted in cantilever fashion on the pick-up frame 88 extend inwardly from the ends of the pick-up 74 to the outer edges (or ends) of this central portion 90 and are driven using power from the associated tractor by a transverse drive shaft 92 disposed behind them, the drive being transmitted by way of chains which are obscured in Fig. 4 by shields 94, 96 encasing them. Although the augers 76, 80 are shown each with a single continuous flight 78, 82, it can be of benefit to provide each instead with two unconnected flights. The flights 78, 82 are, of course, of opposite hand to convey crop inwardly. The scrapers 84, 86 have adjustment slots therein and are mounted, by bolts 98 through these slots, on arcuate plates 100, 102 themselves bolted to the pick-up frame 88. The arcuate plates 100, 102 act as rearward housings for the augers 76, 80, but are omitted from Fig. 1 for the sake of clarity. The scrapers 84, 86 are elongated plates and in plan view (Fig. 4) diverge from the axis of the associated auger 76, 80 in the direction of transfer of crop by the auger. The scrapers 84, 86 have an edge 104 which is closely spaced from the auger flights 78, 82 and follows the shape of a portion of an ellipse.

In operation, when crop is raised by the pick-up 74 from the windrow, that part of the crop which is at the outer ends of the pick-up 74 will pursue paths 106 (to the inlet 60) in which there are no sharp angles through which the crop in those regions must pass but rather there is a transition through smaller angles which allow a smooth change in direction (Fig. 4). The scrapers 84, 86 thus reduce wrapping and also minimise plugging by brittle crop. If the scrapers 84, 86 were arranged parallel to the auger axes a much sharper transition of the crop, indicated by paths 108, occurs and although wrapping is certainly reduced by scrapers in this disposition brittle crop may break due to the sharp angles through which it must progress.

## Claims

1. A pick-up assembly for gathering cut crop and transferring it for processing comprising a pick-up (74) and an auger (76, 80) above the pick-up (74) (when viewed in plan) to transfer crop along the pick-up (74) characterised in that a scraper (84, 86) is in contact with the auger (76, 80), or closely spaced therefrom, so as to reduce wrapping of crop around the auger (76, 80).

2. An assembly according to claim 1 characterised in that the scraper comprises an elongated member (84, 86) which is disposed (in plan view) so as to diverge from the axis of the auger (76, 80) in the direction of transfer of the crop by the auger (76, 80).

3. An assembly according to claim 1 or 2 characterised in that the edge (104) of the scraper (84, 86) next to the auger (76, 80) follows the path of a portion of an ellipse.

4. An assembly according to any preceding claim characterised in that the scraper is a plate (84, 86).

5. An assembly according to any preceding claim in which the assembly (62) has first and second augers (76, 80) of opposite hand the first auger (76) being at one end of the pick-up (74) and the second auger (80) being at the other end thereof so that the transfer of crop material by the augers (76, 80) is toward a central portion (90) of the pick-up (74), characterised in that a said scraper (84, 86) is associated with either auger (76, 80).

6. An assembly according to claim 5 characterised in that the first auger (76) has at least two unconnected flights and the second auger has at least two unconnected flights.

7. An assembly according to any preceding claim characterised in that the scraper or scrapers (84, 86) is (are) adjustable.

8. A baling machine for forming cylindrical bales of crop having a chamber (58) for the formation of the bales and an inlet (60) into the chamber (58), the pick-up (74) being substantially wider than said inlet (60), the central portion (90) of the pick-up (74) being aligned with the inlet (60) characterised in that the machine has a pick-up assembly (62) according to any preceding claim at the inlet.

0 286 776

FIG. 1

FIG. 2

B447

# FIG.3

FIG. 4

8447

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 619 086 (DEHN) <br> * Page 1, lines 20-96; pages 2,3, lines 1-19; figures 1,2,3,4 * <br> --- | 1,2,3,4 | A 01 F 15/00 <br> A 01 D 89/00 <br> A 01 D 61/00 <br> B 65 G 45/00 |
| A | FR-A-1 558 818 (I.H.C.) <br> * Page 1, right-hand column, paragraphs 6,7; page 2; figures 1,2,3 * <br> --- | 1,4,5,6 | |
| A | FR-A-2 260 933 (VAN DE KERCHOVE) <br> * Page 2, lines 23-40; page 3, lines 1-33; figures 1,2,3 * <br> --- | 1,4 | |
| A | EP-A-0 152 085 (DEERE) <br> * Pages 7,8,9; figures 1-7 * <br> ----- | 1 | |

TECHNICAL FIELDS
SEARCHED (Int. Cl.4)

A 01 F
A 01 D
A 01 B
B 65 G

The present search report has been drawn up for all claims

| Place of search | Date of completion of the search | Examiner |
|---|---|---|
| THE HAGUE | 28-06-1988 | VERMANDER R.H. |